Europäisches Patentamt

European Patent Office

Office européen des brevets

(11) Publication number: **0 317 815**
**A2**

## EUROPEAN PATENT APPLICATION

(21) Application number: 88118487.3

(51) Int. Cl.⁴: **G01N 15/05** , **G01N 35/00**

(22) Date of filing: 05.11.88

(30) Priority: 26.11.87 IT 2277587

(43) Date of publication of application:
**31.05.89 Bulletin 89/22**

(84) Designated Contracting States:
**DE ES FR GB IT**

(71) Applicant: **FINBIOMEDICA S.r.l.**
**Via Mestre, 19/D,**
**I-20132 Milan(IT)**

(72) Inventor: **Vicario, Guido**
**Piazza Giulio Cesare, 14**
**I-20145 Milan(IT)**

(74) Representative: **Dr. Ing. A. Racheli & C.**
**Viale San Michele del Carso, 4**
**I-20144 Milano(IT)**

(54) **Apparatus for carrying out multiple tests of the erythrosedimentation speed on human or animal blood or on other liquids.**

(57) The object of this invention is an apparatus for carrying out multiple tests of erythrosedimentation speed on blood or other liquids comprising a series of pipettes (5) communicating with a single cavity under depression, a means for the zero setting of the samples in the pipettes at the higher level, a closing means for the lower end of the pipettes, a means for reading the values capable of signalling the transparency of the liquid contained in the pipettes; in such apparatus the means of automatic simultaneous zero setting of the samples is formed by a valve (9, 11), placed at the zero level of each pipette (5). A suction pump is connected with the chamber (2a) to which the pipettes (5) are attached, so that it can at first discharge the samples, collecting them in a trap bottle, and then sucking a washing liquid placed under the pipettes (5).

FIG. 3

# APPARATUS FOR CARRYING OUT MULTIPLE TESTS OF THE ERYTHROSEDIMENTATION SPEED ON HUMAN OR ANIMAL BLOOD OR ON OTHER LIQUIDS

This invention concerns an apparatus for automatically carrying out multiple tests of the speed of erythrosedimentation, in particular for carrying out said analysis on human or animal blood in a laboratory.

In a previous patent application the same inventor described and claimed, together with others (Mauro Pieroni), an apparatus for laboratory analyses, for example the analysis of the speed of sedimentation of the blood, wherein a large number of blood samples placed in respective test-tubes were successively examined. A light beam, was made to pass across the test-tubes under analysis, then it was analized by a photodetector.

In said patent the principle of communicating containers is used and applied to the air above the Westergreen pipettes so as to obtain a simultaneous zero setting of all the interested pipettes.

In a subsequent patent application (No. 24020-A/80) of the same inventor the engagement between the pipettes and the containers was improved by providing a latch device which blocked the containers at three different levels and carrying out a tight seal between the bottom of the pipettes and the bottom of the container, in order to avoid the red corpuscles in sedimentation from falling into the container, changing the result of the examination.

Furthermore, up till now, in the known apparatus, no other washing system is known apart from the one consisting of repeated suctions and expulsions of washing liquids (water, soapy solution etc.), therefore a dangerous system for the operator if he cannot carry out all the operations with the utmost attention.

The aim of this invention is an apparatus which allows the analysis of erythrosedimentation to be carried out automatically, quickly and reliably.

A further aim is the possibility of carrying out analyses without danger of infection (for the operators, but also for the cleaners, for city cleanliness, for the people dealing with the incinerators etc.) and therefore avoiding the spreading of viruses and infections, of which blood is the main carrier.

The above aims have been reached by an apparatus comprising a series of pipettes communicating with a single cavity under depression, a means for the zero setting of the samples in the pipettes at the upper level, a closing means for the lower end of the pipettes, a reading means capable of signalling the transparency of the liquid contained in the pipettes, wherein the means of automatic simultaneous zero setting of the samples is carried out by a valve placed at the zero level of each pipette.

Preferably the washing of the instruments takes place automatically with a single vacuum pump capable of sucking first the blood and then the various washing liquids placed under the pipettes.

The samples can be drawn with a system in which the blood remains sterile and sealed with complete guarantee for the operator, or else with plastic test-tubes at a low cost; in any way the measuring tubes are in glass in order or comply with the traditional Westergreen method, the sedimentation in plastic in fact giving different values from that in glass.

The apparatus can be provided for the simultaneous analysis of, for example, 30 samples. Several pieces of this apparatus can be placed in an extremely tight space to satisfy large analysis centres.

The machine is prearranged for the exact number of samples to be examined by a keyboard.

By pushing a button a pneumatic device is activated, which carries out an instantaneous suction (1/10 of a second) of the samples.

The reading of the times of sedimentation can take place on a graduated scale in two different ways: manually (for the small analysis centres) or automatically. The manual reading is carried out at the end of the first and second hours, on the graduated scale placed behind the pipettes, on the recall of an acoustic signaler. Instead for the automatic reading a computerized device is provided with optical sensors which allows both the measuring and the printing of the three classic parameters of the Westergreen measure, i.e. reading at the first hour, at the second hour and the reciprocal index between the two values ("Katz index").

It is also possible to carry out the continuous and simultaneous registration on all the samples of the proceeding of sedimentation thus executing the curves of sedimentation of each sample.

A second button, which acts on the vacuum pump, controls, when the analysis has been carried out, the discharge in sequence for sucking the samples, which are preferably collected in a trap bottle. The blood is eliminated from the glass pipettes and also from the containers, so as to leave the material to be thrown away without blood, so as to prevent any contamination of internal or external personnel. The washing is preferably obtained by placing antibacteria liquids and very strong disinfectants under the pipettes and operating the suction pump as for the collecting and filling of samples.

A preferred embodiment foresees a device in which a plug capable of closing the lower end of the pipettes can take up positions at two different levels, in order to either engage said end or not. In this case it can be provided that, when the analysis has been carried out, the release between the pipette and the plug can be carried out by manually pressing a key.

The advantages obtained with this invention essentially consist in avoiding dangerous transfers of samples allowing in such a way a positive simultaneous identification of the identity of patients. Furthermore in the automatic washing, the great danger for the operator of infections coming from handling the samples before and after the analysis is avoided. Finally, according to the invention, one can register, together with the anagraphical information of the patient and the three classical above mentioned parameters, a new, important diagnostic means, i.e. the "curve of sedimentation", which up till now has not been executed for reasons of time and manual labour.

The characteristics of the apparatus according to the invention will now be clarified to a greater extent with the description of an example illustrated in the attached drawings, in which:

Fig. 1 shows a prospective view of part of the apparatus;

Fig. 2 shows a detail of figure 1 in section, exactly a valve;

Fig. 3 shows a vertical section of a pipette interposed between a valve and a container;

Fig. 4 shows a side view of a device closing the end of the pipettes;

Fig. 5 shows a view similar to that of fig. 4, but with the plug in a different position.

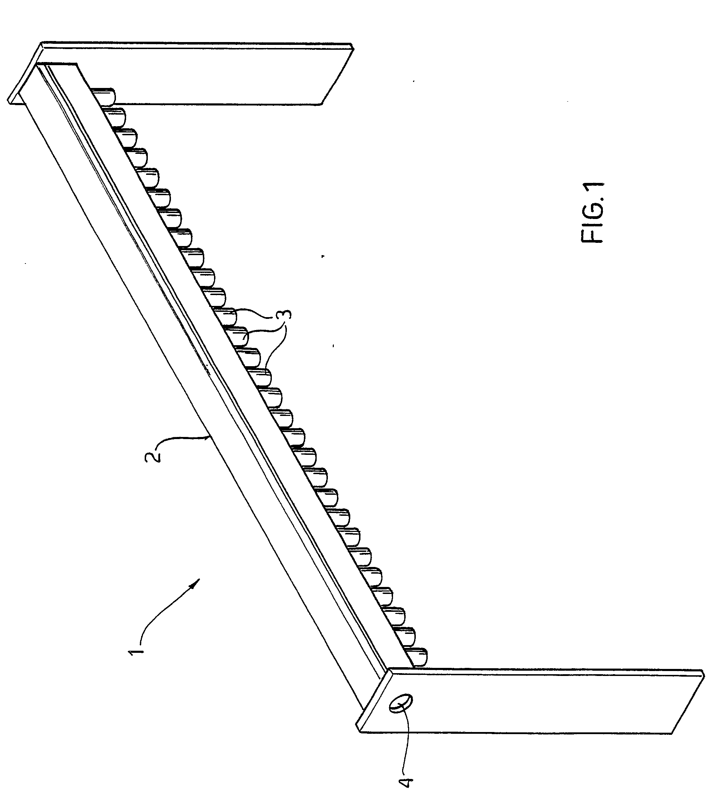

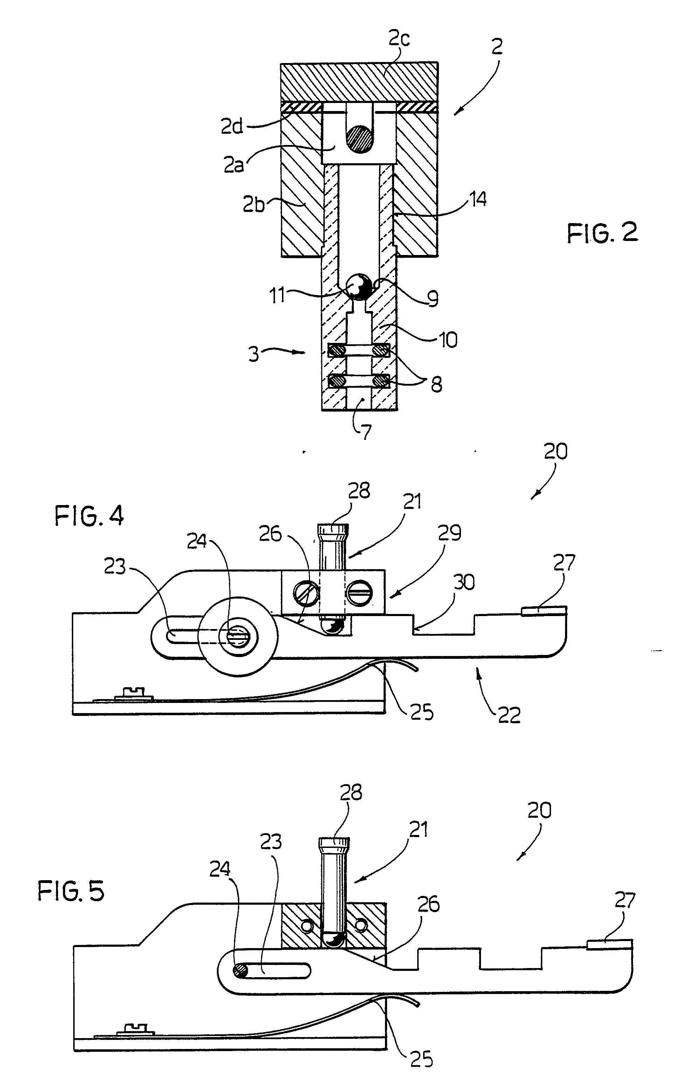

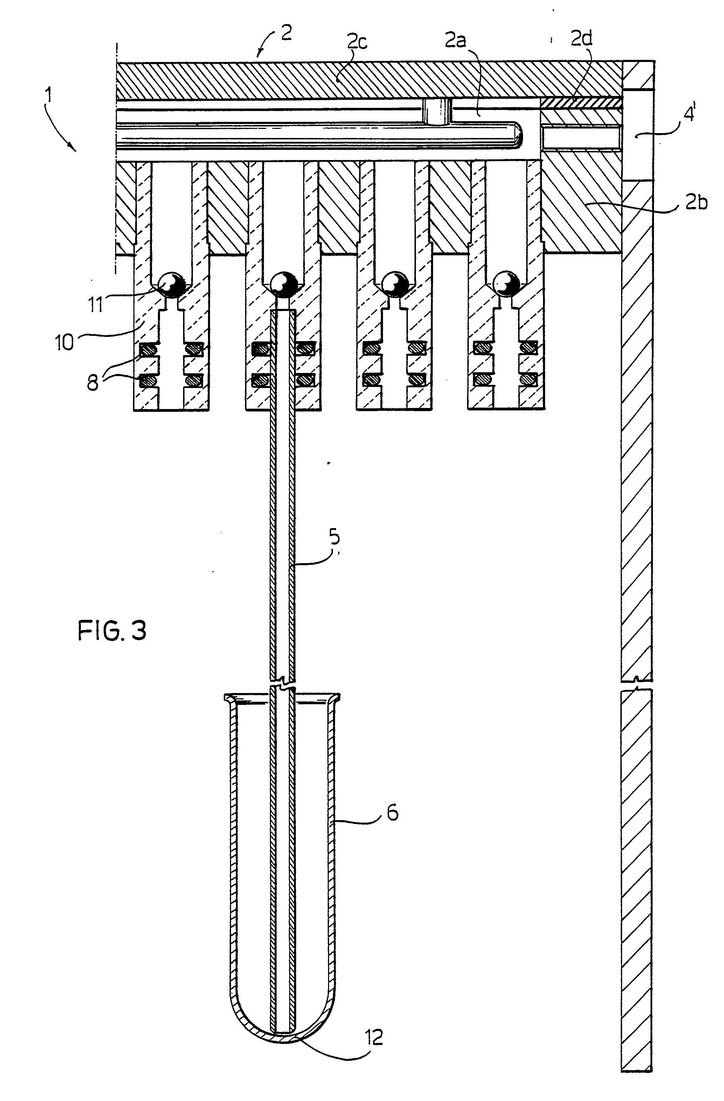

Figure 1 shows part of an apparatus for carrying out multiple tests of the erythrosedimentation speed on blood. Said part of apparatus is a portal element 1, on the inside of the crosspiece 2 of which is an airtight chamber 2a inside a body 2b and a cover 2c between which a fitting 2d is interposed (figure 2). The crosspiece 2 supports (for example with a screw engagement) a series of thirty valve bodies 3, illustrated in a detailed way in figure 2, which are placed in such a way to connect the chamber 2a with the internal canal of the valve. The crosspiece 2 has laterally two end tubes 4 and 4´, one of which connects the chamber 2a with a pneumatic device (not illustrated, but for example a piston pump), while the other one connects the same with a tap, which in turn is connected to a water suction pump, of the known type, with the interposition of a trap bottle.

Each valve body 3 is made of a hollow cylinder 10, one shaped end 7 of which, provided with two lateral O-rings 8, is surmounted by a funnel element 9 which contains a spheric valve 11. The spheric valve 11 closes, in its rear position, the opening of the element 9. The upper end of the cylinder 10 is provided with a screw thread 14 which engages with the crosspiece 2.

The complete apparatus comprises, furthermore, a series of pipettes (5) (fig. 3), a series of containers 6 of blood and a latch device which conditions the engagement between each pipette 5 and the relative container 6. The upper end of each pipette 5 is received in the end 7 of the valve body 3, the funnel elements 9 with relative spheric valve 11 defining above said pipettes 5, while their lower end is inserted in the containers 6 and defined by their bottom 12.

The above described apparatus can also comprise a device 20 like the one shown in figures 4 and 5. The device 20 comprises a plug 21, sliding vertically in a guiding element 29, supporting on one end a bearing 28, while the other end rests on an arm 22, said arm 22 being provided with a slit 23 which engages with a plug 24 and being supported by a spring element 25. The arm 22 has a shaped profile 30 comprising a recess 26 and a button 27 at the opposite end of the slit 23.

When using the apparatus, a series of containers 6 of blood to be examined is conducted under the series of pipettes 5 already inserted in the valve body 3. At this point, pushing a button, the pneumatic device enters in action which, carrying out a depression in the funnel elements 9, determines the instantaneous and contemporaneous filling of all the pipettes 5 until each sample reaches the closing 11, which has been brought to the maximum allowed height. When the pipettes 5 have been filled the device 20 enters in action which, in alternative to an appropriate shape of the bottom of the container 6, carries out the tight sealing of the pipettes 5 to avoid the hour-glass falling of the red corpuscles in the container 6 during the analysis. When the plug 21 rests on the recess 26 (figure 4, in which the plug 24 engages the right end of the slit 23) the bearing 28 is located at a lower level to that of the end of the pipette and therefore does not engage said end; making the arm 22 slide until the plug 24 engages the left end of the slit 23 (fig. 5) the plug is brought to rest on the high part of the profile 30 of the arm 22 and therefore the bearing 28 is brought to the appropriate height for tightly closing the end of the pipette. The release between the pipette and the plug 21 can be driven at any time by manually pressing the button 27, this making the arm 22 rotate around the plug 24 in contrast to the thrust of the spring element 25.

For all the time required for the analysis the assembly remains still, while the computerized device with optic sensors, provided with a luminous source and with a detector between which the pipette is placed, provides the reading. The optic sensors alternatively move high and low with respect to the pipettes, which are held still. The sensors are mounted on a connecting element, which runs on tracks with respect to which it moves like a travelling crane actioned by a reverse gear engine, and are connected to an edp system which memorizes the descent levels of the sedimented part (dark) with respect to the overhanging part (clear) in successive times, in particular after one hour and after two hours. This automatically provides the values of sedimentation speed required, while a printing system of the known type draws up the reports and the curves of sedimentation and writes the anagraphical information of the patients read with an optic pen and drawn by a bar code placed on the back of the samples (as in the patent application of the same inventor).

When the analysis is finished, by pushing a second button which acts on the suction pump, the discharge of the samples is controlled in sequence, collecting the blood in a trap bottle. Again the same suction pump device also automatically washes the apparatus, sucking disinfectant and very strong antibacteria liquids placed under the pipettes and collecting them in a trap bottle.

## Claims

1. Apparatus for carrying out multiple tests of erythrosedimentation speed on blood or other liquids comprising a series of pipettes communicating with a single cavity under depression, a means for the zero setting of the samples in the pipettes at the higher level, a closing means for the lower end of the pipettes, a means of reading the values capable of signalling the transparency of the liquid contained in the pipettes, characterized in that the means of automatic simultaneous zero setting of the samples is made of a valve (9, 11), placed at the zero level of each pipette (5).

2. Apparatus according to claim 1, characterized in that a device (20) is providing comprising a plug (21), capable of tightly closing the lower end of the pipettes (5), and which can be positioned at two different levels, either to engage or not said end of the pipettes (5), allowing the use of the device with a number of pipettes less than the maximum.

3. Apparatus according to claim 2, characterized in that the release between the plug (21) and the end of the pipette (5) can be carried out by manually pressing on a button (27).

4. Apparatus according to any of the previous claims, characterized in that a suction pump is connected to the chamber (2a), so that it can suck the measuring samples, collecting them in a trap bottle, and then suck a washing liquid placed under the pipettes (5).

5. Apparatus according to any of the previous claims, characterized in that a device with optic sensors is provided which can move both vertically or horizontally.

6. Apparatus according to claim 5, characterized in that it is connected to a computer which can carry out the automatic reading and printing of values at the first hour and at the second hour and calculates the reciprocal index of said values ("Katz" index), as well as possibly also the continuous and simultaneous registration on all the samples, of the course of the sedimentation, then working out the curves of sedimentation.

7. Apparatus according to any of the previous claims, characterized in that a graduated scale is placed behind the pipettes (5).

FIG.1

FIG. 2

FIG. 4

FIG. 5

FIG. 3